(19) **Europäisches Patentamt**
**European Patent Office**
**Office européen des brevets**

(11) **EP 4 629 683 A1**

(12) **EUROPEAN PATENT APPLICATION**
published in accordance with Art. 153(4) EPC

(43) Date of publication:
**08.10.2025 Bulletin 2025/41**

(21) Application number: **22966923.9**

(22) Date of filing: **02.12.2022**

(51) International Patent Classification (IPC):
**H04W 12/12** $^{(2021.01)}$

(52) Cooperative Patent Classification (CPC):
**H04W 12/12**

(86) International application number:
**PCT/CN2022/136066**

(87) International publication number:
**WO 2024/113335 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **ZHU, Hui**
  **Dongguan, Guangdong 523860 (CN)**
• **LUO, Chaoming**
  **Dongguan, Guangdong 523860 (CN)**
• **ZHANG, Xuan**
  **Dongguan, Guangdong 523860 (CN)**

(74) Representative: **Mewburn Ellis LLP**
**Aurora Building**
**Counterslip**
**Bristol BS1 6BX (GB)**

(54) **WIRELESS COMMUNICATION METHOD, STATION DEVICE, AND ACCESS POINT DEVICE**

(57) A method for wireless communication, a station (STA), and an access point (AP) are provided in embodiments of the disclosure. In the case where a service set identifier (SSID) in a first frame transmitted by the AP is an SSID to which the STA has been connected, the STA determines, based on identity information, whether the AP is masqueraded by another device. As such, a risk of secret leakage brought by "spoof AP" attacks to a user is resolved, and an increase in signaling overhead is relatively small with little impact on system throughput, thereby making it easy to implement. The method for wireless communication includes the following. An STA receives a first frame, where the first frame contains identity information, and the identity information is determined based on first secret information and time information of an AP. In the case where an SSID in the first frame is an SSID to which the STA has been connected, the STA determines, according to time information of the STA, the first secret information, and the identity information, whether the AP is masqueraded by another device.

FIG. 2

**Description**

TECHNICAL FIELD

Embodiments of the disclosure relate to the field of communication, and more particularly, to a method for wireless communication, a station (STA), and an access point (AP).

BACKGROUND

In wireless local area networks (WLAN), when a station (STA) receives a beacon frame or a probe response frame from an access point (AP), in the case where a service set identifier (SSID) in the beacon frame or the probe response frame belongs to SSIDs to which the STA has been connected, the STA may automatically transmit an association request frame to the AP. Based on this mechanism, an attacker may set up an AP which may be referred to as a "spoof AP", and the "spoof AP" may carry in a beacon frame or a probe response frame an SSID (for example, an SSID of home WLAN of a user) to which a certain user has been connected. Upon reception of the association request frame from the STA, regardless of a media access control (MAC) address used by the STA, the "spoof AP" is able to infer that the user is likely to be within the coverage of the "spoof AP", and thus a particular user can be identified and tracked.

In the case where the SSID in the beacon frame or the probe response frame belongs to SSIDs to which the STA has been connected, how to resolve a risk of secret leakage brought by "spoof AP" attacks to the user or how the STA associates with the AP is a problem that needs to be solved.

SUMMARY

A method for wireless communication, a station (STA), and an access point (AP) are provided in embodiments of the disclosure. In the case where a service set identifier (SSID) in a first frame transmitted by the AP is an SSID to which the STA has been connected, the STA determines, based on identity information carried in the first frame, whether the AP is masqueraded by another device, thereby resolving a risk of secret leakage brought by "spoof AP" attacks to a user. Alternatively, in the case where the SSID in the first frame transmitted by the AP is an SSID to which the STA has been connected, the STA associates with the AP based on the identity information carried in the first frame, thereby enhancing the security of associating the STA with the AP.

In a first aspect, a method for wireless communication is provided. The method includes the following. An STA receives a first frame, where the first frame contains identity information, and the identity information is determined based on first secret information and time information of an AP. In the case where an SSID in the first frame is an SSID to which the STA has been connected, the STA determines, according to time information of the STA, the first secret information, and the identity information, whether the AP is masqueraded by another device, or the STA associates with the AP according to the time information of the STA, the first secret information, and the identity information.

In a second aspect, a method for wireless communication is provided. The method includes the following. An AP transmits a first frame, where the first frame contains identity information, and the identity information is determined based on first secret information and time information of the AP. In the case where an SSID in the first frame is an SSID to which an STA has been connected, the identity information is used by the STA to determine whether the AP is masqueraded by another device, or the identity information is used by the STA to associate with the AP.

In a third aspect, an STA is provided. The STA is configured to perform the method in the first aspect.

Specifically, the STA includes functional modules for performing the method in the first aspect.

In a fourth aspect, an AP is provided. The AP is configured to perform the method in the second aspect.

Specifically, the AP includes functional modules for performing the method in the second aspect.

In a fifth aspect, an STA is provided. The STA includes a processor and a memory. The memory is configured to store a computer program. The processor is configured to invoke and execute the computer program stored in the memory, to cause the STA to perform the method in the first aspect.

In a sixth aspect, an AP is provided. The AP includes a processor and a memory. The memory is configured to store a computer program. The processor is configured to invoke and execute the computer program stored in the memory, to cause the AP to perform the method in the second aspect.

In a seventh aspect, an apparatus is provided. The apparatus is configured to implement the method in any one of the first aspect and the second aspect.

Specifically, the apparatus includes a processor. The processor is configured to invoke and execute a computer program stored in a memory, to cause a device equipped with the apparatus to perform the method in any one of the first aspect and the second aspect.

In an eighth aspect, a computer-readable storage medium is provided. The computer-readable storage medium is configured to store a computer program which causes a computer to perform the method in any one of the first aspect and the second aspect.

In a ninth aspect, a computer program product is provided. The computer program product includes computer program instructions which cause a computer to perform the method in any one of the first aspect and the second aspect.

In a tenth aspect, a computer program is provided. The computer program, when executed by a computer, causes the computer to perform the method in any one of the first aspect and the second aspect.

With the technical solution, in the case where the SSID in the first frame transmitted by the AP is an SSID to which the STA has been connected, the STA determines, based on the identity information carried in the first frame, whether the AP is masqueraded by the another device, thereby resolving a risk of secret leakage brought by "spoof AP" attacks to a user. Alternatively, in the case where the SSID in the first frame transmitted by the AP is an SSID to which the STA has been connected, the STA associates with the AP according to the time information of the STA, the first secret information, and the identity information, thereby enhancing the security of associating the STA with the AP.

BRIEF DESCRIPTION OF THE DRAWINGS

FIG. 1 is a schematic architectural diagram of a communication system to which embodiments of the disclosure are applied.

FIG. 2 is a schematic interaction flow chart of a method for wireless communication according to embodiments of the disclosure.

FIG. 3 is a schematic diagram of an identity information element according to embodiments of the disclosure.

FIG. 4 is a schematic diagram of a beacon frame carrying identity information according to embodiments of the disclosure.

FIG. 5 is a schematic diagram of a probe response frame carrying identity information according to embodiments of the disclosure.

FIG. 6 is a schematic diagram of a management frame according to embodiments of the disclosure.

FIG. 7 is a schematic block diagram of a station (STA) according to embodiments of the disclosure.

FIG. 8 is a schematic block diagram of an access point (AP) according to embodiments of the disclosure.

FIG. 9 is a schematic block diagram of a communication device according to embodiments of the disclosure.

FIG. 10 is a schematic block diagram of an apparatus according to embodiments of the disclosure.

FIG. 11 is a schematic block diagram of a communication system according to embodiments of the disclosure.

DETAILED DESCRIPTION

The following will describe technical solutions of embodiments of the disclosure with reference to the accompanying drawings in embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

The technical solutions of the embodiments of the disclosure may be applied to various communication systems, for example, wireless local area networks (WLAN), wireless fidelity (Wi-Fi), or other communication systems.

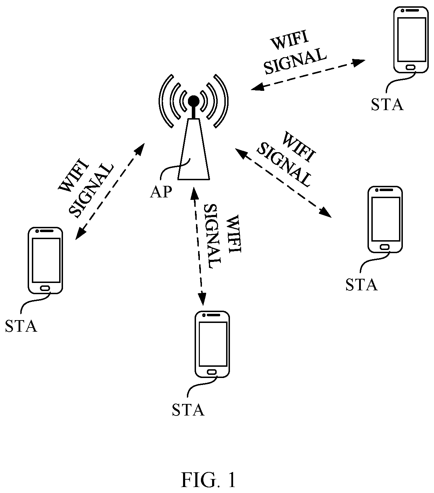

FIG. 1 is a schematic diagram of a wireless communication system provided in an embodiment of the disclosure. As illustrated in FIG. 1, the wireless communication system may include an access point (AP) and a station (STA).

In some scenarios, the AP may be referred to as an AP STA, that is, the AP is also a type of STA in some sense. In some scenarios, the STA may be referred to as a non-AP STA.

In some embodiments, the STA may include an AP STA and a non-AP STA. Communication in the communication system may be communication between the AP and the non-AP STA, communication between the non-AP STAs, or communication between the STA and a peer STA. The peer STA may refer to a device for communicating with a peer of the STA. For example, the peer STA may be an AP or a non-AP STA.

The AP may be a bridge for connecting a wired network and a wireless network. The AP is mainly used for connecting various wireless network clients together and then connecting the wireless network to an Ethernet. The AP may be a terminal device (for example, a mobile phone) having a Wi-Fi chip or a network device (for example, a router).

It may be understood that, a role of the STA in the communication system is not absolute. For example, in some scenarios, when a mobile phone is connected to a router, the mobile phone is a non-AP STA. When the mobile phone is a hotspot for another mobile phone, the mobile phone serves as an AP.

The AP and the non-AP STA may be devices applied to vehicle to everything (V2X); internet of things (IoT) nodes, sensors, etc. in IoT; smart cameras, smart remote controls, smart water meters and electricity meters, etc. in smart home; sensors in smart city, etc.

In some embodiments, the non-AP STA may support 802.11be standards. The non-AP STA may also support various current and future 802.11 WLAN standards, such as 802.11ax, 802.11ac, 802.11n, 802.11g, 802.11b, 802.11a, etc.

In some embodiments, the AP may be a device that supports 802.11be standards. The AP may also be a device that supports various current and future 802.11 WLAN standards, such as 802.11ax, 802.11ac, 802.11n, 802.11g, 802.11b, 802.11a, etc.

In embodiments of the disclosure, the STA may be a device supporting WLAN/Wi-Fi technology, such as a mobile phone, a tablet (pad), a computer, a virtual reality (VR) device, an augmented reality (AR) device, a wireless device in industrial control, a set-top box, a wireless device in self-driving, an in-vehicle communication device, a wireless device in remote medicine, a wireless device in smart grid, a wireless device in transportation safety, a wireless device in smart city or a wireless device in smart home, a wireless communication chip, an application specific integrated circuit (ASIC), a system-on-chip (SOC), etc.

A frequency band supported by WLAN technology may include, but is not limited to, a low frequency band (2.4 Giga Hertz (GHz), 5 GHz, and 6 GHz), and a high frequency band (45 GHz, 60 GHz).

One or more links exist between the STA and the AP. In some embodiments, the STA and the AP support multi-band communication, for example, communicate simultaneously on frequency bands of 2.4 GHz, 5 GHz, 6 GHz, 45 GHz, and 60 GHz, or communicate simultaneously on different channels of the same frequency band (or different frequency bands), thereby improving communication throughput and/or reliability between devices. Such a device is generally referred to as a multi-band device, or referred to as a multi-link device (MLD), and is sometimes referred to as a multi-link entity or a multi-band entity. The MLD may be an AP or an STA. When the MLD is an AP, the MLD includes one or more APs. When the MLD is an STA, the MLD includes one or more non-AP STAs.

An MLD including one or more APs may be referred to as an AP MLD, and an MLD including one or more non-AP STAs may be referred to as a non-AP MLD.

In embodiments of the disclosure, the AP may include multiple APs, and the non-AP includes multiple STAs. Multiple links may be established between an AP(s) in the AP and an STA(s) in the non-AP, and the AP in the AP and the corresponding STA in the non-AP may perform data communication over a corresponding link.

The AP is a device deployed in WLAN to provide wireless communication functions for the STA. The STA may include: a user equipment (UE), an access terminal, a subscriber unit, a subscriber station, a mobile station, a remote station, a remote terminal, a mobile device, a wireless communication device, a user agent, or a user device. Optionally, the STA may also be a cellular phone, a cordless phone, a session initiation protocol (SIP) phone, a wireless local loop (WLL) station, a personal digital assistant (PDA), a handheld device with wireless communication functions, a computing device or other processing device connected to a wireless modem, a vehicle-mounted device, or a wearable device, which is not limited in embodiments of the disclosure.

Optionally, the STA and the AP both support institute of electrical and electronics engineers (IEEE) 802.11 standards.

It may be understood that, the terms "system" and "network" herein are usually used interchangeably throughout this disclosure. The term "and/or" herein only describes an association between associated objects, which means that there can be three relationships. For example, $A$ and/or $B$ can mean $A$ alone, both $A$ and $B$ exist, and $B$ alone. In addition, the character "/" herein generally indicates that the associated objects are in an "or" relationship.

It may be understood that, "indication" referred to in embodiments of the disclosure may be a direct indication, may be an indirect indication, or may mean that there is an association. For example, $A$ indicates $B$ may mean that $A$ directly indicates $B$, for instance, $B$ can be obtained according to $A$; may mean that $A$ indirectly indicates $B$, for instance, $A$ indicates $C$, and $B$ can be obtained according to $C$; or may mean that that there is an association between $A$ and $B$.

Terms used in implementations of the disclosure are only intended for explaining embodiments of the disclosure, rather than limiting the disclosure. The terms "first", "second", "third", "fourth", and the like in the specification and claims of the disclosure, and the accompanying drawings are used to distinguish different objects, and are not necessarily used to describe a particular order. In addition, the terms "include", "comprise", and "have" as well as variations thereof are intended to cover non-exclusive inclusion.

In the elaboration of embodiments of the disclosure, the term "correspondence" may mean that there is a direct or indirect correspondence between the two, or may mean that there is an association between the two, or may mean a relationship of indicating and being indicated or configuring and being configured, etc.

In embodiments of the disclosure, the "pre-defined" or "pre-configured" can be implemented by pre-storing a corresponding code(s) or a corresponding table(s) in a device (for example, including the STA and the network device) or in other manners that can be used for indicating related information, and the disclosure is not limited in this regard. For example, the "pre-defined" may mean defined in a protocol.

In embodiments of the disclosure, the "protocol" may refer to a communication standard protocol, which may include, for example, a Wi-Fi protocol and a related protocol applied to a future Wi-Fi communication system, and the disclosure is not limited in this regard.

To facilitate understanding of technical solutions of embodiments of the disclosure, problems solved in the disclosure will be described below.

The STA can discover the AP in the following two manners. One is passive scanning, that is, the AP broadcasts a beacon frame to announce existence of the AP. The other is active scanning, that is, the STA transmits a probe request frame with a null service set identifier (SSID) or a specified SSID, and upon reception of the probe request frame, the AP transmits a probe response frame to the STA to announce existence of the AP. The beacon frame or the probe response frame transmitted by the AP contains an SSID element, and the SSID is used to identify a basic service set (BSS).

After the STA associates with the AP for the first time, the STA saves SSIDs of the AP. These SSIDs saved by the STA may be referred to as saved SSIDs or preferred SSIDs. When the STA receives the beacon frame or the probe response frame, in the case where an SSID in the beacon frame or the probe response frame belongs to the saved SSIDs and a user has set the network to "connect automatically when this network is in range", an upper-layer application may control a Wi-Fi driver of a device to perform related connection actions (including authentication and association, etc.). Taking a WLAN management program wpa_supplicant as an example, the user can configure network parameters through a graphical interface or a terminal command(s), and wpa_supplicant can automatically control, according to parameters in a configuration file for wpa_supplicant, the Wi-Fi driver of the device to perform network connection.

Due to a potential security risk in a current AP discovery and association mechanism, an attacker may identify and track a particular user. Assuming that the attacker knows one or more SSIDs to which a certain user has been connected, such as an SSID(s) of a home network of the user, the attacker may set up an AP and use the AP to broadcast the SSID(s) of the home network of the user. When the STA receives a beacon frame or a probe response frame from the AP set up by the attacker, in the case where the STA discovers that an SSID in the frame is a saved SSID, the STA may automatically transmit an association request frame to the AP. Regardless of whether the STA is associated with the AP set up by the attacker and regardless of a media access control (MAC) address of the STA, as long as the STA transmits the association request frame to the AP, it indicates that the user is within the coverage of the AP set up by the attacker.

Based on the above problems, a wireless communication solution is provided in the disclosure. In the case where an SSID in a first frame transmitted by the AP is an SSID to which the STA has been connected, the STA determines, based on identity information carried in the first frame, whether the AP is masqueraded by another device, thereby resolving a risk of secret leakage brought by "spoof AP" attacks to a user. Alternatively, in the case where the SSID in the first frame transmitted by the AP is an SSID to which the STA has been connected, the STA associates with the AP based on the identity information carried in the first frame, thereby enhancing the security of associating the STA with the AP.

To facilitate understanding of technical solutions of embodiments of the disclosure, the technical solutions of embodiments of the disclosure will be elaborated below. The related art below, as an optional scheme, can be arbitrarily combined with the technical solutions of embodiments of the disclosure, which shall all belong to the protection scope of embodiments of the disclosure. Embodiments of the disclosure include at least part of the following contents.

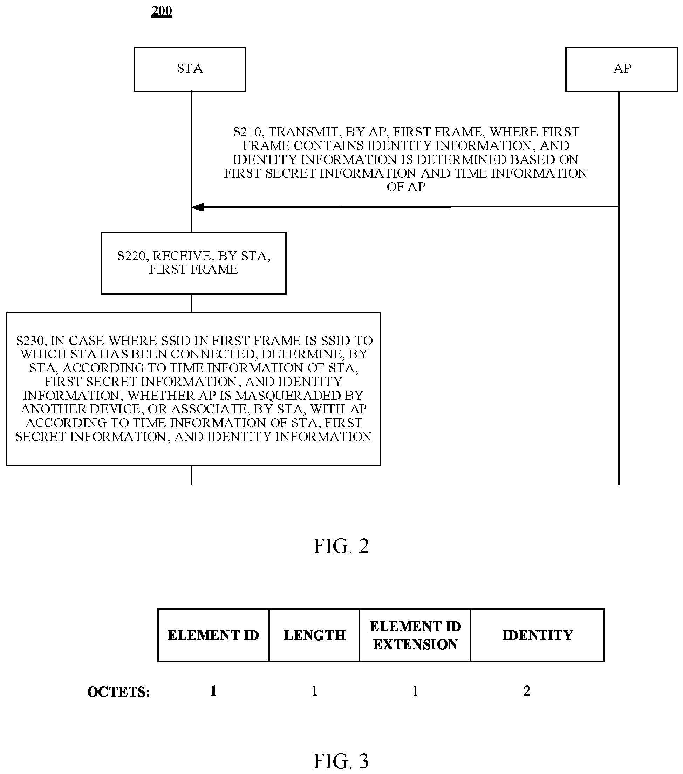

FIG. 2 is a schematic flow chart of a method 200 for wireless communication according to embodiments of the disclosure. As illustrated in FIG. 2, the method 200 for wireless communication may include at least part of the following contents.

S210, an AP transmits a first frame, where the first frame contains identity information, and the identity information is determined based on first secret information and time information of the AP.

S220, an STA receives the first frame.

S230, in the case where an SSID in the first frame is an SSID to which the STA has been connected, the STA determines, according to time information of the STA, the first secret information, and the identity information, whether the AP is masqueraded by another device, or the STA associates with the AP according to the time information of the STA, the first secret information, and the identity information.

That is, in embodiments of the disclosure, in the case where the SSID in the first frame is an SSID to which the STA has been connected, the identity information carried in the first frame is used by the STA to determine whether the AP is masqueraded by the another device, or the identity information carried in the first frame is used by the STA to associate with the AP.

The identity information in embodiments of the disclosure may also be referred to as an identity identifier (ID), an identity parameter, and the like, which is not limited in embodiments of the disclosure. For example, the identity information may be Verify _ID.

In embodiments of the disclosure, a "field" may also be referred to as a "field" or a "subfield". The field may occupy one or more bytes/octets. Alternatively, the field may occupy one or more bits.

In some embodiments, the first frame contains an identity information element. The identity information element contains an identity field, and the identity field indicates the identity information (for example, Verify _ID).

In some embodiments, the first frame is a beacon frame, or the first frame is a probe response frame. Certainly, the first frame may also be another frame, which is not limited in embodiments of the disclosure.

Specifically, for example, a format of the identity information element may be illustrated in FIG. 3. When a value of an element ID is 255, values 114-255 of an element ID extension are reserved and unused, for example, element ID=255 and element ID extension=114 may indicate the identity information element. The identity information element is contained in the beacon frame and the probe response frame, and the AP uses the identity information (for example, Verify_ID) to prove the identity of the AP to the STA. When the STA receives the beacon frame or the probe response frame, in the case where an SSID in the beacon frame or the probe response frame is an SSID to which the STA has been connected, before the STA transmits an association request frame to the AP, the STA verifies based on identity information (for example, Verify_ID) in the beacon frame or the probe response frame whether the AP is masqueraded by another device. If the AP is not masqueraded by the another device, the STA transmits the association request frame, and otherwise, the STA transmits no association request frame.

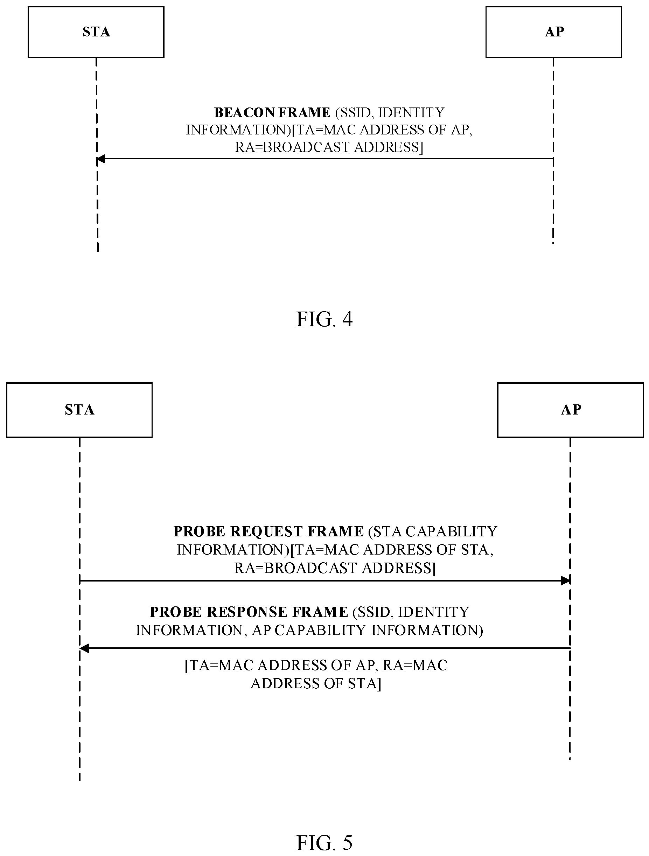

In some embodiments, the first frame is a beacon frame, and the interaction of a beacon frame containing identity information (for example, Verify_ID) is illustrated in FIG. 4. An AP transmits a beacon frame, where the beacon frame contains identity information (for example, Verify_ID) and an SSID of the AP, a transmitter address (TA) of the beacon frame is an MAC address of the AP, and a receiver address (RA) of the beacon frame is a broadcast address.

In some embodiments, the first frame is a probe response frame, and the interaction of a probe response frame containing identity information (for example, Verify_ID) is illustrated in FIG. 5. An STA transmits a probe request frame, and an AP transmits a probe response frame, where the probe response frame contains identity information (for example, Verify_ID) and an SSID of the AP, a TA of the probe response frame is an MAC address of the AP, and an RA of the probe response frame is an MAC address of the STA.

In some embodiments, for S230, the STA determines, according to the time information of the STA, the first secret information, and the identity information, whether the AP is masqueraded by the another device as follows. The STA determines verification information according to the first secret information and the time information of the STA. In the case where the verification information is the same as the identity information, the STA determines that the AP is not masqueraded by the another device; and/or in the case where the verification information is different from the identity information, the STA determines that the AP is masqueraded by the another device.

Specifically, for example, since the MAC layer has a higher implementation efficiency, the comparison between the verification information and the identity information may occur at an MAC layer of the STA. Certainly, the comparison between the verification information and the identity information may also occur at another layer of the STA, such as an application layer, which is not limited in embodiments of the disclosure.

In some embodiments, in the case where the STA determines that the AP is not masqueraded by the another device, the STA transmits an association request frame to the AP.

In some embodiments, in the case where the STA determines that the AP is masqueraded by the another device, the STA transmits no association request frame to the AP, or the STA ignores the first frame.

In WLAN, when the STA receives a beacon frame or a probe response frame from the AP, in the case where an SSID in the frame belongs to SSIDs to which the STA has been connected, the STA may automatically transmit an association request frame to the AP. Based on this mechanism, an attacker may set up an AP which may be referred to as a "spoof AP", and the "spoof AP" may carry in a beacon frame or a probe response frame an SSID (for example, an SSID of home WLAN of a user) to which a certain user has been connected. Upon reception of the association request frame from the STA, regardless of an MAC address used by the STA, the "spoof AP" is able to infer that the user is likely to be within the coverage of the "spoof AP", and thus a particular user can be identified and tracked.

In this embodiment, the AP adds the identity information (for example, Verify_ID) to the first frame to prove the identity of the AP to the STA, where the identity information (for example, Verify_ID) is determined based on the first secret information and the time information of the AP. In the case where the SSID in the first frame is an SSID to which the STA has been connected, before transmitting the association request frame, the STA verifies based on the identity information (for example, Verify_ID) whether the AP is masqueraded by the another device, that is, verifies whether the AP is a "spoof AP". In this way, a risk of secret leakage brought by "spoof AP" attacks to the user can be resolved, and an increase in signaling overhead is relatively small with little impact on system throughput, thereby making it easy to implement.

In some embodiments, for S230, the STA associates with the AP according to the time information of the STA, the first secret information, and the identity information as follows. The STA determines verification information according to the first secret information and the time information of the STA. In the case where the verification information is the same as the identity information, the STA associates with the AP by directly transmitting an association request frame; and/or in the case where the verification information is different from the identity information, the STA associates with the AP through initial access.

Specifically, for example, since the MAC layer has a higher implementation efficiency, the comparison between the verification information and the identity information may occur at an MAC layer of the STA. Certainly, the comparison between the verification information and the identity information may also occur at another layer of the STA, such as an application layer, which is not limited in embodiments of the disclosure.

In some embodiments, the verification information is different from the identity information in the case where system reset has been performed by the AP. That is, the case that the verification information differs from the identity information may be caused by system reset performed by the AP.

Optionally, the case that the verification information differs from the identity information may also be caused by

that the STA and the AP are out of sync.

**[0071]** Specifically, system reset and the like performed by the AP may result in that the AP and the STA are out of sync, in this case, a previously-connected true AP may be regarded by the STA as an AP that has not been connected, and the STA will not automatically connect to the AP. When there is a need to connect to the AP, a user can manually click a network name for reconnection (which is the same as the first connection to the AP in terms of workflow) upon confirmation of the security.

**[0072]** **In** this embodiment, in the case where the SSID in the first frame transmitted by the AP is an SSID to which the STA has been connected, the STA associates with the AP based on the identity information carried in the first frame, thereby enhancing the security of associating the STA with the AP. Specifically, for example, in the case where system reset has been performed by the AP or the STA and the AP are out of sync, the verification information is different from the identity information, and in this case, the STA can associate with the AP through initial access. For another example, when the verification information is the same as the identity information, the STA associates with the AP by directly transmitting the association request frame.

**[0073]** In some embodiments, the time information of the AP is determined based on system time of the AP and a time interval for the AP to update the identity information.

**[0074]** It may be noted that, the system time of the AP is system time when the AP determines the identity information.

**[0075]** Specifically, for example, current system time $T_{ap_now}$ of the AP satisfies $T_{ap_now}=[D:H:M:S]_{AP}$, where $D$ represents a date, $H$ represents an hour, $M$ represents a minute, and $S$ represents a second.

**[0076]** Optionally, the AP sets the system time of the AP based on current time obtained from a universal time server.

**[0077]** In some embodiments, the time interval for the AP to update the identity information may be determined by the AP, or the time interval for the AP to update the identity information may be agreed by a protocol, or the time interval for the AP to update the identity information may be determined by negotiation between the STA and the AP. Optionally, in order to avoid the case that an attacker has enough time to directly copy the identity information and then apply the identity information to a "spoof AP" due to a large time interval for the AP to update the identity information, a value of the time interval for the AP to update the identity information needs to be small, for example, within the following time range (in a unit of a second (s)): [1,2047].

**[0078]** In some embodiments, in the case where the time interval for the AP to update the identity information is less than 60 seconds, the time information of the AP is determined according to formula 1.

$$Time_{AP}=[D:H:M:(S \bmod T)]_{AP} \qquad \text{formula 1}$$

**[0079]** $Time_{AP}$ represents the time information of the AP, $[D:H:M:S]_{AP}$ represents the system time of the AP, $D$ represents a date, $H$ represents an hour, $M$ represents a minute, $S$ represents a second, $T$ represents the time interval for the AP to update the identity information, and mod represents a modulo operation.

**[0080]** In some embodiments, in the case where the time interval for the AP to update the identity information is greater than or equal to 60 seconds, the time information of the AP is determined according to formula 2.

$$Time_{AP}=[D:H:(M \bmod T')]_{AP} \qquad \text{formula 2}$$

**[0081]** $Time_{AP}$ represents the time information of the AP, $[D:H:M:S]_{AP}$ represents the system time of the AP, $D$ represents a date, $H$ represents an hour, $M$ represents a minute, $S$ represents a second, $T$ represents the time interval for the AP to update the identity information, $T'=\lceil T \div 60 \rceil$, $\lceil\ \rceil$ represents rounding up, and mod represents a modulo operation.

**[0082]** In some embodiments, the AP determines the identity information according to the following formula 3.

$$Verify_ID=HASH(IV \| Time_{AP})_m \qquad \text{formula 3}$$

**[0083]** $Verify_ID$ represents the identity information, $IV$ represents the first secret information, $Time_{AP}$ represents the time information of the AP, $\|$ represents string concatenation, $HASH(X)$ represents a hash operation on parameter $X$, $HASH(X)_m$ represents truncation of $m$ bits from a result of $HASH(X)$, and $m$ is a positive integer. For example, $m$=16.

**[0084]** Specifically, for example, an algorithm for the hash operation in formula 3 above may be secure hash algorithm 2 (SHA-2) or secure hash algorithm 3 (SHA-3).

**[0085]** In some embodiments, the $m$ bits are truncated from the result of $HASH(X)$ in a first order.

**[0086]** In some embodiments, the first order is a front-to-back order, or the first order is a back-to-front order.

**[0087]** Specifically, for example, $HASH(X)_{16}$ represents truncation of 16 bits from the result of $HASH(X)$. For example, the 16 bits may be obtained by performing truncation backwards from the 0-th bit, or the 16 bits may be obtained by

performing truncation forwards from the last bit, or the 16 bits may be obtained by performing truncation forwards or backwards from the x-th bit, where x may be agreed by a protocol or determined by negotiation between the STA and the AP.

In some embodiments, the time information of the STA is determined based on system time of the STA and a time interval for the AP to update the identity information.

Specifically, for example, current system time $T_{STA\_now}$ of the STA satisfies $T_{STA\_now}=[D:H:M:S]_{STA}$, where $D$ represents a date, $H$ represents an hour, $M$ represents a minute, and $S$ represents a second.

Optionally, the STA sets the system time of the STA based on current time obtained from a universal time server.

In some embodiments, the STA locally maintains a list, as illustrated in table 1. The first column of the list is SSIDs of APs associated with the STA, and the second column of the list is time intervals for updating the identity information (for example, Verify_ID) by the APs associated with the STA.

Table 1

| SSIDs of APs associated with STA | Time intervals for updating identity information by APs associated with STA |
| --- | --- |
| $SSID_1$ | $T_1$ |
| $SSID_2$ | $T_2$ |
| $SSID_3$ | $T_3$ |
| ... | ... |
| $SSID_n$ | $T_n$ |

In some embodiments, in the case where the time interval for the AP to update the identity information is less than 60 seconds, the time information of the STA is determined according to the following formula 4.

$$Time_{STA}=[D:H:M:(S \bmod T)]_{STA} \qquad \text{formula 4}$$

$Time_{STA}$ represents the time information of the STA, $[D:H:M:S]_{STA}$ represents the system time of the STA, $D$ represents a date, $H$ represents an hour, $M$ represents a minute, $S$ represents a second, $T$ represents the time interval for the AP to update the identity information, and mod represents a modulo operation.

In some embodiments, in the case where the time interval for the AP to update the identity information is greater than or equal to 60 seconds, the time information of the STA is determined according to the following formula 5.

$$Time_{STA}=[D:H: (M \bmod T')]_{STA} \qquad \text{formula 5}$$

$Time_{STA}$ represents the time information of the STA, $[D:H:M:S]_{STA}$ represents the system time of the STA, $D$ represents a date, $H$ represents an hour, $M$ represents a minute, $S$ represents a second, $T$ represents the time interval for the AP to update the identity information, $T'=\lceil T \div 60 \rceil$, $\lceil \ \rceil$ represents rounding up, and mod represents a modulo operation.

In some embodiments, in the case where an error between the system time of the STA and the system time of the AP has a significant impact on time information for calculating the identity information (for example, the time interval for the AP to update the identity information is 10 seconds, and the error is 5 seconds), the time information of the STA is determined based on the system time of the STA, the time interval for the AP to update the identity information, and the error between the system time of the STA and the system time of the AP.

Optionally, the error is determined based on the system time of the STA and the system time of the AP. That is, after obtaining the system time of the AP, the STA can determine the error based on the system time of the STA and the system time of the AP.

Specifically, for example, the error (unit: second) between the system time of the STA and the system time of the AP is + 1, that is, the system time of the STA is 1 second earlier than the system time of the AP.

Specifically, for example, the error (unit: second) between the system time of the STA and the system time of the AP is -5, that is, the system time of the STA is 5 seconds later than the system time of the AP.

In some embodiments, the STA locally maintains a list, as illustrated in table 2. The first column of the list is SSIDs of APs associated with the STA, the second column of the list is errors between the system time of the STA and the system time of the APs associated with the STA, and the third column of the list is time intervals for updating the identity information (for example, Verify_ID) by the APs associated with the STA.

Table 2

| SSIDs of APs associated with STA | Errors between system time of STA and system time of APs associated with STA | Time intervals for updating identity information by APs associated with STA |
|---|---|---|
| $SSID_1$ | $\Delta t_1$ | $T_1$ |
| $SSID_2$ | $\Delta t_2$ | $T_2$ |
| $SSID_3$ | $\Delta t_3$ | $T_3$ |
| ... | ... | ... |
| $SSID_n$ | $\Delta t_n$ | $T_n$ |

In some embodiments, in the case where the time interval for the AP to update the identity information is less than 60 seconds, the time information of the STA is determined according to the following formula 6.

$$Time_{STA}=[D':H':M':(S' \bmod T)] \qquad \text{formula 6}$$

$Time_{STA}$ represents the time information of the STA, [$D':H':M':S'$] represents time obtained by subtracting the error from the system time of the STA, $D'$ represents a date, $H'$ represents an hour, $M'$ represents a minute, $S'$ represents a second, $T$ represents the time interval for the AP to update the identity information, and mod represents a modulo operation.

In some embodiments, in the case where the time interval for the AP to update the identity information is greater than or equal to 60 seconds, the time information of the STA is determined according to the following formula 7.

$$Time_{STA}=[D':H': (M' \bmod T')] \qquad \text{formula 7}$$

$Time_{STA}$ represents the time information of the STA, [$D':H':M':S'$] represents time obtained by subtracting the error from the system time of the STA, $D'$ represents a date, $H'$ represents an hour, $M'$ represents a minute, $S'$ represents a second, $T$ represents the time interval for the AP to update the identity information, $T'=\lceil T \div 60 \rceil$, $\lceil \ \rceil$ represents rounding up, and mod represents a modulo operation.

In some embodiments, the STA determines the verification information according to the following formula 8.

$$Verify\_ID'=HASH(IV\|Time_{STA})_m \qquad \text{formula 8}$$

$Verify\_ID'$ represents the verification information, $IV$ represents the first secret information, $Time_{STA}$ represents the time information of the STA, $\|$ represents string concatenation, $HASH(X)$ represents a hash operation on parameter $X$, $HASH(X)_m$ represents truncation of $m$ bits from a result of $HASH(X)$, and $m$ is a positive integer.

In some embodiments, the $m$ bits are truncated from the result of $HASH (X)$ in a first order.

In some embodiments, the first order is a front-to-back order, or the first order is a back-to-front order.

Specifically, for example, $HASH(X)_{16}$ represents truncation of 16 bits from the result of $HASH(X)$. For example, the 16 bits may be obtained by performing truncation backwards from the 0-th bit, or the 16 bits may be obtained by performing truncation forwards from the last bit, or the 16 bits may be obtained by performing truncation forwards or backwards from the x-th bit, where $x$ may be agreed by a protocol or determined by negotiation between the STA and the AP.

In some embodiments, before the STA receives the first frame, the STA receives a second frame from the AP after initial access of the STA to the AP. The second frame contains at least one of: a time interval for the AP to update the identity information or system time of the AP.

In some embodiments, the second frame is a management frame, or the second frame is a control frame. Certainly, the second frame may also be another frame, which is not limited in embodiments of the disclosure.

In some embodiments, the second frame contains a time1 present field and a time2 present field. The time1 present field indicates whether the second frame contains a time1 field, and the time2 present field indicates whether the second frame contains a time2 field. The time1 field indicates the time interval for the AP to update the identity information, and the time2 field indicates the system time of the AP.

Optionally, the time1 present field occupies 1 bit. For example, a value of the time1 present field being 1 indicates that the second frame contains a time1 field, and the value of the time1 present field being 0 indicates that the second frame contains no time1 field. For another example, the value of the time1 present field being 0 indicates that the second frame contains a time1 field, and the value of the time1 present field being 1 indicates that the second frame contains no time1 field.

Optionally, the time2 present field occupies 1 bit. For example, a value of the time2 present field being 1 indicates that the second frame contains a time2 field, and the value of the time2 present field being 0 indicates that the second frame contains no time2 field. For another example, the value of the time2 present field being 0 indicates that the second frame contains a time2 field, and the value of the time2 present field being 1 indicates that the second frame contains no time2 field.

In some embodiments, the time interval for the AP to update the identity information and/or the system time of the AP in the second frame are encrypted by the AP. Specifically, the time interval for the AP to update the identity information and/or the system time of the AP are encrypted based on a secret value determined by negotiation between the STA and the AP.

In some embodiments, the first secret information is a secret value shared between the AP and an associated STA.

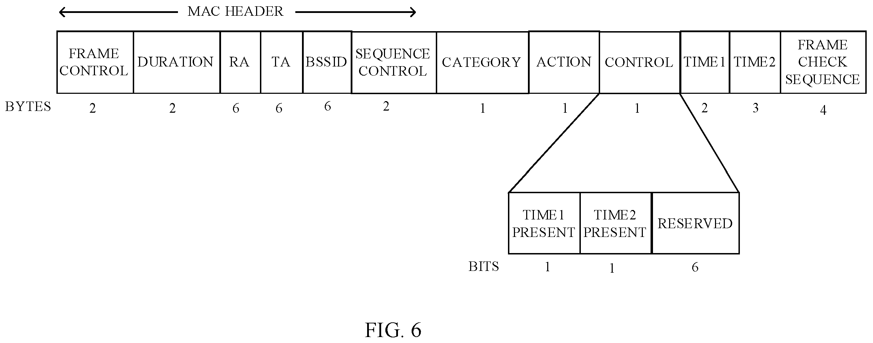

Specifically, for example, the second frame is a management frame. A frame format of the management frame may be illustrated in FIG. 6. The management frame is an action frame. Since values "30-125" of a category field in the action frame are reserved, any value (for example, "32") is selected from the values "30-125" for indication in this embodiment. The time1 present field being set to "1" indicates that a time1 field exists, and the time1 present field being not set to "1" indicates that no time1 field exists. A value of the time1 field is a time interval for the AP to change the identity information (Verify _ID). In the time1 field, the first 11 bits are valid, and the last 5 bits are reserved and unused. A value of time1 ranges from 1 to 2047, and a unit of time1 is a second. The time2 present field being set to "1" indicates that a time2 field exists, and the time2 present field being not set to "1" indicates that no time2 field exists. A value of the time2 field is the system time of the AP. A first byte/octet indicates an hour, a second byte/octet indicates a minute, and a third byte/octet indicates a second.

In some embodiments, the first secret information is agreed by a protocol, or the first secret information is determined by negotiation between the STA and the AP, or the first secret information is configured by the AP.

In some embodiments, the first secret information is a preshared key (PSK) or a simultaneous authentication of equals (SAE) key.

In some embodiments, the first secret information is a key derived from the PSK or the SAE key.

Specifically, after the STA accesses the AP for the first time, the STA negotiates a secret value $IV$ with the AP, where the secret value $IV$ may be a network key (for example, a PSK or an SAE key) or a key derived from the network key (for example, the PSK or the SAE key), and all STAs associated with the AP have the same $IV$. After completion of secure association of the STA with the AP, the AP can put the time interval for the AP to change the identity information (Verify_ID) and the current system time of the AP into the management frame illustrated in FIG. 6 for encryption, and then transmit the management frame to the STA. Upon reception of the management frame, the STA obtains through decryption the time interval for the AP to change the identity information (Verify _ID), and the STA directly obtains the current system time of the AP from a time2 field in the management frame. Optionally, the STA may determine an error based on current system time of the STA and the current system time of the AP, and maintain the error in table 2 above.

The technical solution of an embodiment of the disclosure will be elaborated below. Specifically, when an STA receives a beacon frame or a probe response frame, in the case where an SSID in the frame belongs to SSIDs to which the STA has been connected, before transmitting an association request frame to an AP, the STA needs to verify the validity of the beacon frame and the probe response frame based on identity information (Verify_ID) in the beacon frame or the probe response frame, i.e., verify whether the AP is masqueraded by another device. The STA verifies the validity of the beacon frame and the probe response frame as follows.

Step 1, the STA obtains current system time of the STA. This time is denoted as $T_{STA\_now}=[D{:}H{:}M{:}S]_{STA}$, where $D$ represents a date, $H$ represents an hour, $M$ represents a minute, and $S$ represents a second.

Step 2, the STA searches for in the above table 2, according to the SSID in the beacon frame or the probe response frame, a corresponding error and a corresponding time interval $T$ for the AP to update the identity information (for example, Verify _ID).

Step 3, the STA obtains, by subtracting from $T_{STA\_now}$ the error obtained in Step 2, a time $T_{now'}$ synchronized with the AP, where $T_{now'}=[D'{:}H'{:}M'{:}S']$.

Step 4, if a value of the time interval $T$ is within a range (0,60), $Time_{STA}=[D'{:}H'{:}M'{:}(S' \bmod T)]$. If the value of the time interval $T$ is within a range [60,2047], $Time_{STA}=[D'{:}H'{:}(M' \bmod T')]$, where $T'=\lceil T \div 60 \rceil$, and $\lceil \ \rceil$ represents rounding up.

Step 5, the STA calculates verification information $Verify\_ID'=HASH(IV\|Time_{STA})_{16}$, where $IV$ is a secret value between the STA and the AP. If a value of the calculated $Verify\_ID'$ is equal to a value of Verify_ID in the beacon frame or the probe response frame, the STA transmits the association request frame, and otherwise, the STA transmits no association request frame.

Therefore, in embodiments of the disclosure, the AP adds the identity information (for example, Verify_ID) to the first frame to prove the identity of the AP to the STA, where the identity information (for example, Verify_ID) is determined based on the first secret information and the time information of the AP. In the case where the SSID in the first frame is an SSID to which the STA has been connected, before transmitting the association request frame, the STA verifies based on the identity information (for example, Verify _ID) whether the AP is masqueraded by another device, that is, verifies whether the AP is a "spoof AP". In this way, a risk of secret leakage brought by "spoof AP" attacks to a user can be resolved. In addition, adding only the field Verify_ID to the first frame (for example, the beacon frame or the probe response frame) can solve the problem of the "spoof AP", and a value of Verify_ID is obtained through hash calculation, which has the advantages of simple implementation and low communication overhead. Furthermore, an increase in signaling overhead is relatively small with little impact on system throughput, thereby making it easy to implement.

Alternatively, in embodiments of the disclosure, in the case where the SSID in the first frame transmitted by the AP is an SSID to which the STA has been connected, the STA associates with the AP based on the identity information carried in the first frame, thereby enhancing the security of associating the STA with the AP. Specifically, for example, in the case where system reset has been performed by the AP or the STA and the AP are out of sync, the verification information is different from the identity information, and in this case, the STA can associate with the AP through initial access. For another example, when the verification information is the same as the identity information, the STA associates with the AP by directly transmitting an association request frame.

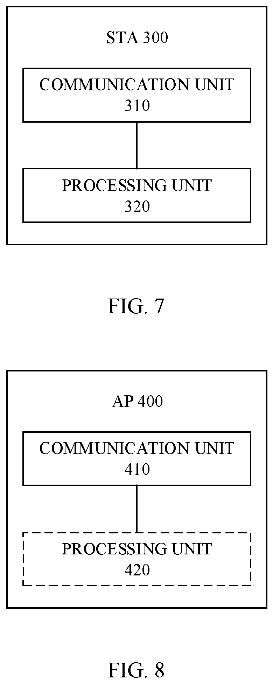

The method embodiments of the disclosure are described in detail above with reference to FIG. 2 to FIG. 6, and apparatus embodiments of the disclosure will be described in detail below with reference to FIG. 7 to FIG. 11. It may be understood that the apparatus embodiments and the method embodiments correspond to each other, and for similar illustrations, reference can be made to the method embodiments.

FIG. 7 is a schematic block diagram of an STA 300 according to embodiments of the disclosure. As illustrated in FIG. 7, the STA 300 includes a communication unit 310 and a processing unit 320. The communication unit 310 is configured to receive a first frame, where the first frame contains identity information, and the identity information is determined based on first secret information and time information of an AP. The processing unit 320 is configured to determine, according to time information of the STA, the first secret information, and the identity information, whether the AP is masqueraded by another device, or associate with the AP according to the time information of the STA, the first secret information, and the identity information, in the case where an SSID in the first frame is an SSID to which the STA has been connected.

In some embodiments, the processing unit 320 is specifically configured to determine verification information according to the first secret information and the time information of the STA. The processing unit 320 is further configured to determine that the AP is not masqueraded by the another device, in the case where the verification information is the same as the identity information; and/or determine that the AP is masqueraded by the another device, in the case where the verification information is different from the identity information.

In some embodiments, in the case where the STA determines that the AP is not masqueraded by the another device, the communication unit 310 is further configured to transmit an association request frame to the AP.

In some embodiments, in the case where the STA determines that the AP is masqueraded by the another device, the STA transmits no association request frame to the AP, or the STA ignores the first frame.

In some embodiments, the processing unit 320 is specifically configured to determine verification information according to the first secret information and the time information of the STA. The processing unit 320 is further configured to associate with the AP by directly transmitting an association request frame, in the case where the verification information is the same as the identity information; and/or associate with the AP through initial access, in the case where the verification information is different from the identity information.

In some embodiments, the verification information is different from the identity information in the case where system reset has been performed by the AP.

In some embodiments, the processing unit 320 is specifically configured to determine the verification information according to the following formula: $Verify\_ID'=HASH(IV\|Time_{STA})_m$. $Verify\_ID'$ represents the verification information, $IV$ represents the first secret information, $Time_{STA}$ represents the time information of the STA, $\|$ represents string concatenation, $HASH(X)$ represents a hash operation on parameter $X$, $HASH(X)_m$ represents truncation of $m$ bits from a result of $HASH(X)$, and $m$ is a positive integer.

In some embodiments, the identity information is determined according to the following formula: $Verify\_ID=HASH(IV\|Time_{AP})_m$. $Verify\_ID$ represents the identity information, IV represents the first secret information, $Time_{AP}$ represents the time information of the AP, $\|$ represents string concatenation, $HASH(X)$ represents a hash operation on parameter $X$, $HASH(X)_m$ represents truncation of $m$ bits from a result of $HASH(X)$, and $m$ is a positive integer.

In some embodiments, the $m$ bits are truncated from the result of $HASH(X)$ in a first order.

In some embodiments, the first order is a front-to-back order, or the first order is a back-to-front order.

In some embodiments, the time information of the STA is determined based on system time of the STA and a time interval for the AP to update the identity information.

In some embodiments, in the case where the time interval for the AP to update the identity information is less than 60 seconds, the time information of the STA is determined according to the following formula: $Time_{STA}=[D{:}H{:}M{:}(S \bmod T)]_{STA}$. In the case where the time interval for the AP to update the identity information is greater than or equal to 60 seconds, the time information of the STA is determined according to the following formula: $Time_{STA}=[D{:}H{:}(M \bmod T')]_{STA}$. $Time_{STA}$ represents the time information of the STA, $[D{:}H{:}M{:}S]_{STA}$ represents the system time of the STA, $D$ represents a date, $H$ represents an hour, $M$ represents a minute, $S$ represents a second, $T$ represents the time interval for the AP to update the identity information, $T'=\lceil T \div 60 \rceil$, $\lceil \ \rceil$ represents rounding up, and mod represents a modulo operation.

In some embodiments, the time information of the STA is determined based on system time of the STA, a time interval for the AP to update the identity information, and an error between the system time of the STA and system time of the AP.

In some embodiments, in the case where the time interval for the AP to update the identity information is less than 60 seconds, the time information of the STA is determined according to the following formula: $Time_{STA}=[D'{:}H'{:}M'{:}(S' \bmod T)]$. In the case where the time interval for the AP to update the identity information is greater than or equal to 60 seconds, the time information of the STA is determined according to the following formula: $Time_{STA}=[D'{:}H'{:}(M' \bmod T')]$. $Time_{STA}$ represents the time information of the STA, $[D'{:}H'{:}M'{:}S']$ represents time obtained by subtracting the error from the system time of the STA, $D'$ represents a date, $H'$ represents an hour, $M'$ represents a minute, $S'$ represents a second, $T$ represents the time interval for the AP to update the identity information, $T'=\lceil T \div 60 \rceil$, $\lceil \ \rceil$ represents rounding up, and mod represents a modulo operation.

In some embodiments, the error is determined based on the system time of the STA and the system time of the AP.

In some embodiments, before the STA receives the first frame, the communication unit 310 is further configured to receive a second frame from the AP after initial access of the STA to the AP. The second frame contains at least one of: a time interval for the AP to update the identity information or system time of the AP.

In some embodiments, the second frame contains a time1 present field and a time2 present field. The time1 present field indicates whether the second frame contains a time1 field, and the time2 present field indicates whether the second frame contains a time2 field. The time1 field indicates the time interval for the AP to update the identity information, and the time2 field indicates the system time of the AP.

In some embodiments, the time interval for the AP to update the identity information and/or the system time of the AP in the second frame are encrypted by the AP.

In some embodiments, the second frame is a management frame, or the second frame is a control frame.

In some embodiments, the time information of the AP is determined based on system time of the AP and a time interval for the AP to update the identity information.

In some embodiments, in the case where the time interval for the AP to update the identity information is less than 60 seconds, the time information of the AP is determined according to the following formula: $Time_{AP}=[D{:}H{:}M{:}(S \bmod T)]_{AP}$. In the case where the time interval for the AP to update the identity information is greater than or equal to 60 seconds, the time information of the AP is determined according to the following formula: $Time_{AP}=[D{:}H{:}(M \bmod T')]_{AP}$. $Time_{AP}$ represents the time information of the AP, $[D{:}H{:}M{:}S]_{AP}$ represents the system time of the AP, $D$ represents a date, $H$ represents an hour, $M$ represents a minute, $S$ represents a second, $T$ represents the time interval for the AP to update the identity information, $T'=\lceil T \div 60 \rceil$, $\lceil \ \rceil$ represents rounding up, and mod represents a modulo operation.

In some embodiments, the first secret information is a secret value shared between the AP and an associated STA.

In some embodiments, the first secret information is a PSK or an SAE key. Alternatively, the first secret information is a key derived from the PSK or the SAE key.

In some embodiments, the first secret information is agreed by a protocol, or the first secret information is determined by negotiation between the STA and the AP, or the first secret information is configured by the AP.

In some embodiments, the first frame contains an identity information element. The identity information element contains an identity field, and the identity field indicates the identity information.

In some embodiments, the first frame is a beacon frame, or the first frame is a probe response frame.

In some embodiments, the communication unit above may be a communication interface or a transceiver, or may be an input/output interface of a communication chip or an SOC. The processing unit above may be one or more processors.

It may be understood that, the STA 300 according to embodiments of the disclosure may correspond to the STA in the method embodiments of the disclosure, and the foregoing and other operations and/or functions of various units in the STA 300 are respectively intended for implementing corresponding procedures of the STA in the method 200 illustrated in FIG. 2, which will not be repeated herein for the sake of simplicity.

FIG. 8 is a schematic block diagram of an AP 400 according to embodiments of the disclosure. As illustrated in FIG. 8, the AP 400 includes a communication unit 410. The communication unit 410 is configured to transmit a first frame, where the first frame contains identity information, and the identity information is determined based on first secret information and time information of the AP. In the case where an SSID in the first frame is an SSID to which an STA has been connected, the identity information is used by the STA to determine whether the AP is masqueraded by another device, or the identity information is used by the STA to associate with the AP.

In some embodiments, the identity information is used by the STA to determine whether the AP is masqueraded by the another device as follows. In the case where verification information is the same as the identity information, the AP is determined by the STA not to be masqueraded by the another device; and/or in the case where the verification information is different from the identity information, the AP is determined by the STA to have been masqueraded by the another device. The verification information is determined based on the first secret information and time information of the STA.

In some embodiments, the communication unit 410 is further configured to receive an association request frame from the STA, in the case where the AP is determined by the STA not to be masqueraded by the another device.

In some embodiments, the identity information is used by the STA to associate with the AP as follows. In the case where verification information is the same as the identity information, the STA associates with the AP by directly transmitting an association request frame; and/or in the case where the verification information is different from the identity information, the STA associates with the AP through initial access. The verification information is determined based on the first secret information and time information of the STA.

In some embodiments, the verification information is different from the identity information in the case where system reset has been performed by the AP.

In some embodiments, the verification information is determined based on the first secret information and the time information of the STA as follows. The verification information is determined according to the following formula: $Verify\_ID'=HASH(IV\|Time_{STA})_m$. $Verify\_ID'$ represents the verification information, $IV$ represents the first secret information, $Time_{STA}$ represents the time information of the STA, $\|$ represents string concatenation, $HASH(X)$ represents a hash operation on parameter $X$, $HASH(X)_m$ represents truncation of $m$ bits from a result of $HASH(X)$, and $m$ is a positive integer.

In some embodiments, the time information of the STA is determined based on system time of the STA and a time interval for the AP to update the identity information.

In some embodiments, in the case where the time interval for the AP to update the identity information is less than 60 seconds, the time information of the STA is determined according to the following formula: $Time_{STA}=[D{:}H{:}M{:}(S \bmod T)]_{STA}$. In the case where the time interval for the AP to update the identity information is greater than or equal to 60 seconds, the time information of the STA is determined according to the following formula: $Time_{STA}=[D{:}H{:}(M \bmod T')]_{STA}$. $Time_{STA}$ represents the time information of the STA, $[D{:}H{:}M{:}S]_{STA}$ represents the system time of the STA, $D$ represents a date, $H$ represents an hour, $M$ represents a minute, $S$ represents a second, $T$ represents the time interval for the AP to update the identity information, $T'=\lceil T \div 60 \rceil$, $\lceil \; \rceil$ represents rounding up, and mod represents a modulo operation.

In some embodiments, the time information of the STA is determined based on system time of the STA, a time interval for the AP to update the identity information, and an error between the system time of the STA and system time of the AP.

In some embodiments, in the case where the time interval for the AP to update the identity information is less than 60 seconds, the time information of the STA is determined according to the following formula: $Time_{STA}=[D'{:}H'{:}M'{:}(S' \bmod T)]$. In the case where the time interval for the AP to update the identity information is greater than or equal to 60 seconds, the time information of the STA is determined according to the following formula: $Time_{STA}=[D'{:}H'{:}(M' \bmod T')]$. $Time_{STA}$ represents the time information of the STA, $[D'{:}H'{:}M'{:}S']$ represents time obtained by subtracting the error from the system time of the STA, $D'$ represents a date, $H'$ represents an hour, $M'$ represents a minute, $S'$ represents a second, $T$ represents the time interval for the AP to update the identity information, $T'=\lceil T \div 60 \rceil$, $\lceil \; \rceil$ represents rounding up, and mod represents a modulo operation.

In some embodiments, the error is determined based on the system time of the STA and the system time of the AP.

In some embodiments, before the AP transmits the first frame, the communication unit 410 is further configured to transmit a second frame after initial access of the STA to the AP. The second frame contains at least one of: a time interval for the AP to update the identity information or system time of the AP.

In some embodiments, the second frame contains a time1 present field and a time2 present field. The time1 present field indicates whether the second frame contains a time1 field, and the time2 present field indicates whether the second frame contains a time2 field. The time1 field indicates the time interval for the AP to update the identity information, and the time2 field indicates the system time of the AP.

In some embodiments, the time interval for the AP to update the identity information and/or the system time of the AP in the second frame are encrypted by the AP.

In some embodiments, the second frame is a management frame, or the second frame is a control frame.

In some embodiments, the AP 400 further includes a processing unit 420. The processing unit 420 is configured to determine the identity information according to the following formula: $Verify\_ID=HASH(IV\|Time_{AP})_m$. $Verify\_ID$ represents the identity information, $IV$ represents the first secret information, $Time_{AP}$ represents the time information of the AP, ∥ represents string concatenation, *HASH(X)* represents a hash operation on parameter *X*, *HASH(X)$_m$* represents truncation of *m* bits from a result of *HASH(X)*, and *m* is a positive integer.

In some embodiments, the *m* bits are truncated from the result of *HASH (X)* in a first order.

In some embodiments, the first order is a front-to-back order, or the first order is a back-to-front order.

In some embodiments, the time information of the AP is determined based on system time of the AP and a time interval for the AP to update the identity information.

In some embodiments, in the case where the time interval for the AP to update the identity information is less than 60 seconds, the time information of the AP is determined according to the following formula: $Time_{AP}=[D{:}H{:}M{:}(S \bmod T)]_{AP}$. In the case where the time interval for the AP to update the identity information is greater than or equal to 60 seconds, the time information of the AP is determined according to the following formula: $Time_{AP}=[D{:}H{:}(M \bmod T')]_{AP}$. $Time_{AP}$ represents the time information of the AP, $[D{:}H{:}M{:}S]_{AP}$ represents the system time of the AP, *D* represents a date, *H* represents an hour, *M* represents a minute, *S* represents a second, *T* represents the time interval for the AP to update the identity information, $T'=\lceil T \div 60 \rceil$, ⌈ ⌉ represents rounding up, and mod represents a modulo operation.

In some embodiments, the first secret information is a secret value shared between the AP and an associated STA.

In some embodiments, the first secret information is a PSK or an SAE key. Alternatively, the first secret information is a key derived from the PSK or the SAE key.

In some embodiments, the first secret information is agreed by a protocol, or the first secret information is determined by negotiation between the STA and the AP, or the first secret information is configured by the AP.

In some embodiments, the first frame contains an identity information element. The identity information element contains an identity field, and the identity field indicates the identity information.

In some embodiments, the first frame is a beacon frame, or the first frame is a probe response frame.

In some embodiments, the communication unit above may be a communication interface or a transceiver, or may be an input/output interface of a communication chip or an SOC. The processing unit above may be one or more processors.

It may be understood that, the AP 400 according to embodiments of the disclosure may correspond to the AP in the method embodiments of the disclosure, and the foregoing and other operations and/or functions of various units in the AP 400 are respectively intended for implementing corresponding procedures of the AP in the method 200 illustrated in FIG. 2, which will not be repeated herein for the sake of simplicity.

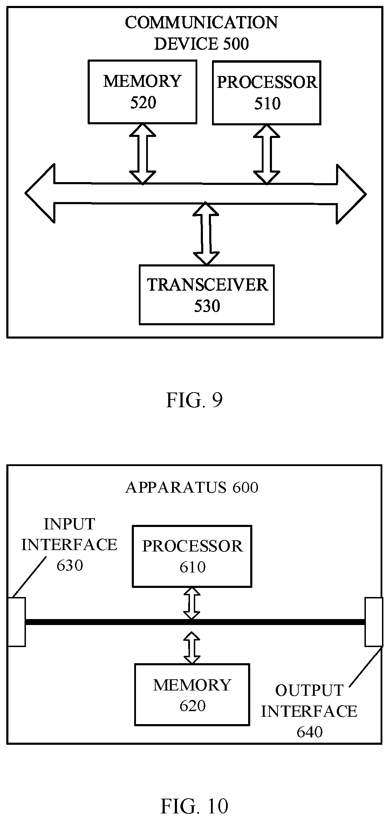

FIG. 9 is a schematic structural diagram of a communication device 500 provided in embodiments of the disclosure. The communication device 500 illustrated in FIG. 9 includes a processor 510. The processor 510 can invoke and execute a computer program stored in a memory, so as to implement the method in embodiments of the disclosure.

In some embodiments, as illustrated in FIG. 9, the communication device 500 may further include a memory 520. The processor 510 can invoke and execute a computer program stored in the memory 520, so as to implement the method in embodiments of the disclosure.

The memory 520 may be a separate device independent of the processor 510, or may be integrated into the processor 510.

In some embodiments, as illustrated in FIG. 9, the communication device 500 may further include a transceiver 530. The processor 510 can control the transceiver 530 to communicate with other devices, specifically, to transmit information or data to other devices or to receive information or data from other devices.

The transceiver 530 may include a transmitter and a receiver. The transceiver 530 may further include an antenna, where one or more antennas may be provided.

In some embodiments, the processor 510 may implement the function of a processing unit in an STA, or the processor 510 may implement the function of a processing unit in an AP, which will not be repeated herein for the sake of simplicity.

In some embodiments, the transceiver 530 may implement the function of a communication unit in the STA, which will not be repeated herein for the sake of simplicity.

In some embodiments, the transceiver 530 may implement the function of a communication unit in the AP, which will not be repeated herein for the sake of simplicity.

In some embodiments, the communication device 500 may specifically be the AP in embodiments of the disclosure, and the communication device 500 may implement corresponding operations implemented by the AP in various methods in embodiments of the disclosure, which will not be repeated herein for the sake of simplicity.

In some embodiments, the communication device 500 may specifically be the STA in embodiments of the disclosure, and the communication device 500 may implement corresponding operations implemented by the STA in various methods in embodiments of the disclosure, which will not be repeated herein for the sake of simplicity.

FIG. 10 is a schematic structural diagram of an apparatus according to embodiments of the disclosure. The apparatus 600 illustrated in FIG. 10 includes a processor 610. The processor 610 can invoke and execute a computer program stored in a memory, so as to implement the method in embodiments of the disclosure.

In some embodiments, as illustrated in FIG. 10, the apparatus 600 may further include a memory 620. The processor 610 can invoke and execute a computer program stored in the memory 620, so as to implement the method in embodiments of the disclosure.

The memory 620 may be a separate device independent of the processor 610, or may be integrated into the processor 610.

In some embodiments, the processor 610 may implement the function of a processing unit in an STA, or the processor 610 may implement the function of a processing unit in an AP, which will not be repeated herein for the sake of simplicity.

In some embodiments, the apparatus 600 may further include an input interface 630. The processor 610 can control the input interface 630 to communicate with other devices or chips, and specifically, to obtain information or data transmitted by other devices or chips. Optionally, the processor 610 may be located in chip or off chip.

In some embodiments, the input interface 630 may implement the function of a communication unit in the STA, or the input interface 630 may implement the function of a communication unit in the AP.

In some embodiments, the apparatus 600 may further include an output interface 640. The processor 610 can control the output interface 640 to communicate with other devices or chips, and specifically, to output information or data to other devices or chips. Optionally, the processor 610 may be located in chip or off chip.

In some embodiments, the output interface 640 may implement the function of the communication unit in the STA, or the output interface 640 may implement the function of the communication unit in the AP.

In some embodiments, the apparatus may be applied to the AP in embodiments of the disclosure, and the apparatus may implement corresponding operations implemented by the AP in various methods in embodiments of the disclosure, which will not be repeated herein for the sake of simplicity.

In some embodiments, the apparatus may be applied to the STA in embodiments of the disclosure, and the apparatus may implement corresponding operations implemented by the STA in various methods in embodiments of the disclosure, which will not be repeated herein for the sake of simplicity.

In some embodiments, the apparatus mentioned in embodiments of the disclosure may also be a chip, for example, an SoC.

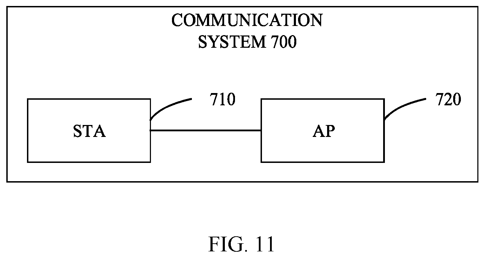

FIG. 11 is a schematic block diagram of a communication system 700 provided in embodiments of the disclosure. As illustrated in FIG. 11, the communication system 700 includes an STA 710 and an AP 720.

The STA 710 may be configured to implement corresponding functions implemented by the STA in the foregoing methods, and the AP 720 may be configured to implement corresponding functions implemented by the AP in the foregoing methods, which will not be repeated herein for the sake of simplicity.

It may be understood that, the processor in embodiments of the disclosure may be an integrated circuit chip with signal processing capabilities. During implementation, each step of the foregoing method embodiments may be completed by an integrated logic circuit of hardware in the processor or an instruction in the form of software. The processor may be a general-purpose processor, a digital signal processor (DSP), an ASIC, a field programmable gate array (FPGA), or other programmable logic devices, discrete gates or transistor logic devices, discrete hardware components. The methods, steps, and logic blocks disclosed in embodiments of the disclosure can be implemented or executed. The general-purpose processor may be a microprocessor, or the processor may be any conventional processor or the like. The steps of the method disclosed in embodiments of the disclosure may be directly implemented by a hardware decoding processor, or may be performed by hardware and software modules in the decoding processor. The software module can be located in a storage medium mature in the skill such as a random access memory (RAM), a flash memory, a read-only memory (ROM), a programmable ROM (PROM), or an electrically erasable programmable memory, registers, and the like. The storage medium is located in the memory. The processor reads the information in the memory, and completes the steps of the method described above with the hardware of the processor.

It may be understood that, the memory in embodiments of the disclosure may be a volatile memory or a non-volatile memory, or may include both the volatile memory and the non-volatile memory. The non-volatile memory may be a ROM, a PROM, an erasable PROM (EPROM), an electrically EPROM (EEPROM), or a flash memory. The volatile memory may be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It may be noted that, the memory of the systems and methods described in the disclosure is intended to include, but is not limited to, these and any other suitable types of memory.

It may be understood that, the memory above is intended for illustration rather than limitation. For example, the memory in embodiments of the disclosure may also be an SRAM, a DRAM, an SDRAM, a DDR SDRAM, an ESDRAM, an SLDRAM, a DR RAM, etc. In other words, the memory in embodiments of the disclosure is intended to include, but is not limited to, these and any other suitable types of memory.

A computer-readable storage medium is further provided in embodiments of the disclosure. The computer-readable storage medium is configured to store a computer program.

In some embodiments, the computer-readable storage medium may be applied to the AP in embodiments of the disclosure, and the computer program causes a computer to execute corresponding operations implemented by the AP in various methods in embodiments of the disclosure, which will not be repeated herein for the sake of brevity.

In some embodiments, the computer-readable storage medium may be applied to the STA in embodiments of the disclosure, and the computer program causes a computer to execute corresponding operations implemented by the STA in various methods in embodiments of the disclosure, which will not be repeated herein for the sake of brevity.

A computer program product is further provided in embodiments of the disclosure. The computer program product includes computer program instructions.

In some embodiments, the computer program product may be applied to the AP in embodiments of the disclosure, and the computer program instructions cause a computer to execute corresponding operations implemented by the AP in various methods in embodiments of the disclosure, which will not be repeated herein for the sake of brevity.

In some embodiments, the computer program product may be applied to the STA in embodiments of the disclosure, and the computer program instructions cause a computer to execute corresponding operations implemented by the STA in various methods in embodiments of the disclosure, which will not be repeated herein for the sake of brevity.

A computer program is further provided in embodiments of the disclosure.

In some embodiments, the computer program may be applied to the AP in embodiments of the disclosure. The computer program, when executed by a computer, causes the computer to implement corresponding operations implemented by the AP in various methods in embodiments of the disclosure, which will not be repeated herein for the sake of brevity.

In some embodiments, the computer program may be applied to the STA in embodiments of the disclosure. The computer program, when executed by a computer, causes the computer to implement corresponding operations implemented by the STA in various methods in embodiments of the disclosure, which will not be repeated herein for the sake of brevity.

It will be appreciated by those of ordinary skill in the art that units and algorithmic operations of various examples described in connection with embodiments of the disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be repeated herein.

It will be appreciated that the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one.

If the functions are implemented as software functional units and sold or used as standalone products, they may be stored in a computer-readable storage medium. Based on such an understanding, the essential technical solution, or the portion that contributes to the prior art, or part of the technical solution of the disclosure may be embodied as software products. The computer software products can be stored in a storage medium and may include multiple instructions that, when executed, can cause a computer device, e.g., a personal computer, a server, a network device, etc., to execute some or all operations of the methods described in various embodiments of the disclosure. The above storage medium may include various kinds of media that can store program codes, such as a universal serial bus (USB) flash disk, a mobile hard drive, an ROM, an RAM, a magnetic disk, or an optical disk.

The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

**Claims**

1. A method for wireless communication, comprising:

   receiving, by a station (STA), a first frame, wherein the first frame contains identity information, and the identity information is determined based on first secret information and time information of an access point (AP); and
   in a case where a service set identifier (SSID) in the first frame is an SSID to which the STA has been connected, determining, by the STA according to time information of the STA, the first secret information, and the identity information, whether the AP is masqueraded by another device, or associating, by the STA, with the AP according to the time information of the STA, the first secret information, and the identity information.

2. The method of claim 1, wherein determining, by the STA according to the time information of the STA, the first secret information, and the identity information, whether the AP is masqueraded by the another device comprises:

   determining, by the STA, verification information according to the first secret information and the time information of the STA; and
   in a case where the verification information is the same as the identity information, determining, by the STA, that the AP is not masqueraded by the another device; and/or in a case where the verification information is different from the identity information, determining, by the STA, that the AP is masqueraded by the another device.

3. The method of claim 2, further comprising:
   in a case where the STA determines that the AP is not masqueraded by the another device, transmitting, by the STA, an association request frame to the AP.

4. The method of claim 2, further comprising:
   in a case where the STA determines that the AP is masqueraded by the another device, transmitting, by the STA, no association request frame to the AP, or ignoring, by the STA, the first frame.

5. The method of claim 1, wherein associating, by the STA, with the AP according to the time information of the STA, the first secret information, and the identity information comprises:

   determining, by the STA, verification information according to the first secret information and the time information of the STA; and
   in a case where the verification information is the same as the identity information, associating, by the STA, with the AP by directly transmitting an association request frame; and/or in a case where the verification information is different from the identity information, associating, by the STA, with the AP through initial access.

6. The method of claim 5, wherein
   the verification information is different from the identity information in a case where system reset has been performed by the AP.

7. The method of any one of claims 2 to 6, wherein determining, by the STA, the verification information according to the first secret information and the time information of the STA comprises:

   determining, by the STA, the verification information according to the following formula:

$$Verify\_ID'=HASH(IV\|Time_{STA})_m;$$

   where $Verify\_ID'$ represents the verification information, $IV$ represents the first secret information, $Time_{STA}$ represents the time information of the STA, $\|$ represents string concatenation, $HASH(X)$ represents a hash operation on parameter $X$, $HASH(X)_m$ represents truncation of $m$ bits from a result of $HASH(X)$, and $m$ is a positive integer.

8. The method of any one of claims 1 to 7, wherein

   the identity information is determined according to the following formula:

$$Verify\_ID=HASH(IV\|Time_{AP})_m;$$

where *Verify_ID* represents the identity information, *IV* represents the first secret information, *Time$_{AP}$* represents the time information of the AP, ∥ represents string concatenation, *HASH(X)* represents a hash operation on parameter *X*, *HASH(X)$_m$* represents truncation of *m* bits from a result of *HASH(X)*, and *m* is a positive integer.

9. The method of claim 7 or 8, wherein
the *m* bits are truncated from the result of *HASH (X)* in a first order.

10. The method of claim 9, wherein
the first order is a front-to-back order, or the first order is a back-to-front order.

11. The method of any one of claims 1 to 10, wherein the time information of the STA is determined based on system time of the STA and a time interval for the AP to update the identity information.

12. The method of claim 11, wherein

in a case where the time interval for the AP to update the identity information is less than 60 seconds, the time information of the STA is determined according to the following formula:

$$Time_{STA}=[D{:}H{:}M{:}(S \bmod T)]_{STA};$$

in a case where the time interval for the AP to update the identity information is greater than or equal to 60 seconds, the time information of the STA is determined according to the following formula: *Time$_{STA}$*=[*D:H*: (*M* mod *T'*)]$_{STA}$; and
*Time$_{STA}$* represents the time information of the STA, [*D:H:M:S*]$_{STA}$ represents the system time of the STA, *D* represents a date, *H* represents an hour, *M* represents a minute, *S* represents a second, *T* represents the time interval for the AP to update the identity information, $T'=\lceil T\div 60\rceil$, ⌈ ⌉ represents rounding up, and mod represents a modulo operation.

13. The method of any one of claims 1 to 10, wherein
the time information of the STA is determined based on system time of the STA, a time interval for the AP to update the identity information, and an error between the system time of the STA and system time of the AP.

14. The method of claim 13, wherein

in a case where the time interval for the AP to update the identity information is less than 60 seconds, the time information of the STA is determined according to the following formula:

$$Time_{STA}=[D'{:}H'{:}M'{:}(S' \bmod T)];$$

in a case where the time interval for the AP to update the identity information is greater than or equal to 60 seconds, the time information of the STA is determined according to the following formula: *Time$_{STA}$*=[*D':H'*: (*M'* mod *T'*)]; and
*Time$_{STA}$* represents the time information of the STA, [*D':H':M':S'*] represents time obtained by subtracting the error from the system time of the STA, *D'* represents a date, *H'* represents an hour, *M'* represents a minute, *S'* represents a second, *T* represents the time interval for the AP to update the identity information, $T'=\lceil T\div 60\rceil$, ⌈ ⌉ represents rounding up, and mod represents a modulo operation.

15. The method of claim 13 or 14, wherein
the error is determined based on the system time of the STA and the system time of the AP.

16. The method of any one of claims 11 to 15, wherein before receiving, by the STA, the first frame, the method further comprises:

receiving, by the STA, a second frame from the AP after initial access of the STA to the AP, wherein
the second frame contains at least one of: a time interval for the AP to update the identity information or system time of the AP.

17. The method of claim 16, wherein

the second frame contains a time1 present field and a time2 present field;
the time1 present field indicates whether the second frame contains a time1 field, and the time2 present field indicates whether the second frame contains a time2 field; and
the time1 field indicates the time interval for the AP to update the identity information, and the time2 field indicates the system time of the AP.

18. The method of claim 16 or 17, wherein
the time interval for the AP to update the identity information and/or the system time of the AP in the second frame are encrypted by the AP.

19. The method of any one of claims 16 to 18, wherein
the second frame is a management frame, or the second frame is a control frame.

20. The method of any one of claims 1 to 19, wherein the time information of the AP is determined based on system time of the AP and a time interval for the AP to update the identity information.

21. The method of claim 20, wherein

in a case where the time interval for the AP to update the identity information is less than 60 seconds, the time information of the AP is determined according to the following formula:

$$Time_{AP}=[D{:}H{:}M{:}(S \bmod T)]_{AP};$$

in a case where the time interval for the AP to update the identity information is greater than or equal to 60 seconds, the time information of the AP is determined according to the following formula: $Time_{AP}=[D{:}H{:}(M \bmod T')]_{AP}$; and $Time_{AP}$ represents the time information of the AP, $[D{:}H{:}M{:}S]_{AP}$ represents the system time of the AP, $D$ represents a date, $H$ represents an hour, $M$ represents a minute, $S$ represents a second, $T$ represents the time interval for the AP to update the identity information, $T'=\lceil T \div 60 \rceil$, $\lceil \ \rceil$ represents rounding up, and mod represents a modulo operation.

22. The method of any one of claims 1 to 21, wherein
the first secret information is a secret value shared between the AP and an associated STA.

23. The method of claim 22, wherein

the first secret information is a preshared key (PSK) or a simultaneous authentication of equals (SAE) key; or
the first secret information is a key derived from the PSK or the SAE key.

24. The method of any one of claims 1 to 21, wherein
the first secret information is agreed by a protocol, or the first secret information is determined by negotiation between the STA and the AP, or the first secret information is configured by the AP.

25. The method of any one of claims 1 to 24, wherein

the first frame contains an identity information element;
wherein the identity information element contains an identity field, and the identity field indicates the identity information.

26. The method of any one of claims 1 to 25, wherein
the first frame is a beacon frame, or the first frame is a probe response frame.

27. A method for wireless communication, comprising:

transmitting, by an access point (AP), a first frame, wherein the first frame contains identity information, and the identity information is determined based on first secret information and time information of the AP, wherein in a case where a service set identifier (SSID) in the first frame is an SSID to which a station (STA) has been connected, the identity information is used by the STA to determine whether the AP is masqueraded by another device, or the identity information is used by the STA to associate with the AP.

28. The method of claim 27, wherein the case that the identity information is used by the STA to determine whether the AP is masqueraded by the another device comprises that:

in a case where verification information is the same as the identity information, the AP is determined by the STA not to be masqueraded by the another device; and/or in a case where the verification information is different from the identity information, the AP is determined by the STA to have been masqueraded by the another device, wherein
the verification information is determined based on the first secret information and time information of the STA.

29. The method of claim 28, further comprising:
in a case where the AP is determined by the STA not to be masqueraded by the another device, receiving, by the AP, an association request frame from the STA.

30. The method of claim 27, wherein the case that the identity information is used by the STA to associate with the AP comprises that:

in a case where verification information is the same as the identity information, the STA associates with the AP by directly transmitting an association request frame; and/or in a case where the verification information is different from the identity information, the STA associates with the AP through initial access, wherein
the verification information is determined based on the first secret information and time information of the STA.

31. The method of claim 30, wherein
the verification information is different from the identity information in a case where system reset has been performed by the AP.

32. The method of any one of claims 28 to 31, wherein the case that the verification information is determined based on the first secret information and the time information of the STA comprises that:

the verification information is determined according to the following formula:

$$Verify\_ID' = HASH(IV \| Time_{STA})_m;$$

where *Verify_ID'* represents the verification information, *IV* represents the first secret information, *Time$_{STA}$* represents the time information of the STA, $\|$ represents string concatenation, *HASH(X)* represents a hash operation on parameter *X*, *HASH(X)$_m$* represents truncation of *m* bits from a result of *HASH(X)*, and *m* is a positive integer.

33. The method of any one of claims 28 to 32, wherein the time information of the STA is determined based on system time of the STA and a time interval for the AP to update the identity information.

34. The method of claim 33, wherein

in a case where the time interval for the AP to update the identity information is less than 60 seconds, the time information of the STA is determined according to the following formula:

$$Time_{STA} = [D{:}H{:}M{:}(S \bmod T)]_{STA};$$

in a case where the time interval for the AP to update the identity information is greater than or equal to 60 seconds, the time information of the STA is determined according to the following formula: $Time_{STA}=[D:H: (M \bmod T')]_{STA}$; and

$Time_{STA}$ represents the time information of the STA, $[D:H:M:S]_{STA}$ represents the system time of the STA, $D$ represents a date, $H$ represents an hour, $M$ represents a minute, $S$ represents a second, $T$ represents the time interval for the AP to update the identity information, $T'=\lceil T \div 60 \rceil$, $\lceil \ \rceil$ represents rounding up, and mod represents a modulo operation.

35. The method of any one of claims 28 to 32, wherein
the time information of the STA is determined based on system time of the STA, a time interval for the AP to update updating the identity information, and an error between the system time of the STA and system time of the AP.

36. The method of claim 35, wherein

in a case where the time interval for the AP to update the identity information is less than 60 seconds, the time information of the STA is determined according to the following formula:

$$Time_{STA}=[D':H':M':(S' \bmod T)];$$

in a case where the time interval for the AP to update the identity information is greater than or equal to 60 seconds, the time information of the STA is determined according to the following formula: $Time_{STA}=[D':H': (M' \bmod T')]$; and

$Time_{STA}$ represents the time information of the STA, $[D':H':M':S']$ represents time obtained by subtracting the error from the system time of the STA, $D'$ represents a date, $H'$ represents an hour, $M'$ represents a minute, $S'$ represents a second, $T$ represents the time interval for the AP to update the identity information, $T'=\lceil T \div 60 \rceil$, $\lceil \ \rceil$ represents rounding up, and mod represents a modulo operation.

37. The method of claim 35 or 36, wherein
the error is determined based on the system time of the STA and the system time of the AP.

38. The method of any one of claims 33 to 37, wherein before transmitting, by the AP, the first frame, the method further comprises:

transmitting, by the AP, a second frame after initial access of the STA to the AP, wherein
the second frame contains at least one of: a time interval for the AP to update the identity information or system time of the AP.

39. The method of claim 38, wherein

the second frame contains a time1 present field and a time2 present field;
the time1 present field indicates whether the second frame contains a time1 field, and the time2 present field indicates whether the second frame contains a time2 field; and
the time1 field indicates the time interval for the AP to update the identity information, and the time2 field indicates the system time of the AP.

40. The method of claim 38 or 39, wherein
the time interval for the AP to update the identity information and/or the system time of the AP in the second frame are encrypted by the AP.

41. The method of any one of claims 38 to 40, wherein
the second frame is a management frame, or the second frame is a control frame.

42. The method of any one of claims 27 to 41, further comprising:

determining, by the AP, the identity information according to the following formula:

$$Verify\_ID=HASH(IV\|Time_{AP})_m;$$

where *Verify_ID* represents the identity information, *IV* represents the first secret information, $Time_{AP}$ represents the time information of the AP, $\|$ represents string concatenation, *HASH(X)* represents a hash operation on parameter *X*, $HASH(X)_m$ represents truncation of *m* bits from a result of *HASH(X),* and *m* is a positive integer.

43. The method of claim 32 or 42, wherein
the *m* bits are truncated from the result of *HASH (X)* in a first order.

44. The method of claim 43, wherein
the first order is a front-to-back order, or the first order is a back-to-front order.

45. The method of any one of claims 27 to 44, wherein the time information of the AP is determined based on system time of the AP and a time interval for the AP to update the identity information.

46. The method of claim 45, wherein

in a case where the time interval for the AP to update the identity information is less than 60 seconds, the time information of the AP is determined according to the following formula:

$$Time_{AP}=[D{:}H{:}M{:}(S \bmod T)]_{AP};$$

in a case where the time interval for the AP to update the identity information is greater than or equal to 60 seconds, the time information of the AP is determined according to the following formula: $Time_{AP}=[D{:}H{:}(M \bmod T')]_{AP}$; and $Time_{AP}$ represents the time information of the AP, $[D{:}H{:}M{:}S]_{AP}$ represents the system time of the AP, *D* represents a date, *H* represents an hour, *M* represents a minute, *S* represents a second, *T* represents the time interval for the AP to update the identity information, $T'=\lceil T \div 60 \rceil$, $\lceil\ \rceil$ represents rounding up, and mod represents a modulo operation.

47. The method of any one of claims 27 to 46, wherein
the first secret information is a secret value shared between the AP and an associated STA.

48. The method of claim 47, wherein

the first secret information is a preshared key (PSK) or a simultaneous authentication of equals (SAE) key; or the first secret information is a key derived from the PSK or the SAE key.

49. The method of any one of claims 27 to 46, wherein
the first secret information is agreed by a protocol, or the first secret information is determined by negotiation between the STA and the AP, or the first secret information is configured by the AP.

50. The method of any one of claims 27 to 49, wherein

the first frame contains an identity information element;
wherein the identity information element contains an identity field, and the identity field indicates the identity information.

51. The method of any one of claims 27 to 50, wherein
the first frame is a beacon frame, or the first frame is a probe response frame.

52. A station (STA), comprising:

a communication unit configured to receive a first frame, wherein the first frame contains identity information, and the identity information is determined based on first secret information and time information of an access point (AP); and

a processing unit configured to determine, according to time information of the STA, the first secret information, and the identity information, whether the AP is masqueraded by another device, or associate with the AP according to the time information of the STA, the first secret information, and the identity information, in a case where a service set identifier (SSID) in the first frame is an SSID to which the STA has been connected.

53. An access point (AP), comprising:

a communication unit configured to transmit a first frame, wherein the first frame contains identity information, and the identity information is determined based on first secret information and time information of the AP, wherein in a case where a service set identifier (SSID) in the first frame is an SSID to which a station (STA) has been connected, the identity information is used by the STA to determine whether the AP is masqueraded by another device, or the identity information is used by the STA to associate with the AP.

54. A station (STA), comprising a processor and a memory, wherein the memory is configured to store a computer program, and the processor is configured to invoke and execute the computer program stored in the memory, to cause the STA to perform the method of any one of claims 1 to 26.

55. An access point (AP), comprising a processor and a memory, wherein the memory is configured to store a computer program, and the processor is configured to invoke and execute the computer program stored in the memory, to cause the AP to perform the method of any one of claims 27 to 51.

56. A chip, comprising a processor, wherein the processor is configured to invoke and execute a computer program stored in a memory, to cause a device equipped with the chip to perform the method of any one of claims 1 to 26.

57. A chip, comprising a processor, wherein the processor is configured to invoke and execute a computer program stored in a memory, to cause a device equipped with the chip to perform the method of any one of claims 27 to 51.

58. A computer-readable storage medium configured to store a computer program which, when executed, causes the method of any one of claims 1 to 26 to be implemented.

59. A computer-readable storage medium configured to store a computer program which, when executed, causes the method of any one of claims 27 to 51 to be implemented.

60. A computer program product comprising computer program instructions which, when executed, causes the method of any one of claims 1 to 26 to be implemented.

61. A computer program product comprising computer program instructions which, when executed, causes the method of any one of claims 27 to 51 to be implemented.

62. A computer program which, when executed, causes the method of any one of claims 1 to 26 to be implemented.

63. A computer program which, when executed, causes the method of any one of claims 27 to 51 to be implemented.

FIG. 1

**200**

```
┌─────────────┐                                    ┌─────────────┐
│     STA     │                                    │     AP      │
└─────────────┘                                    └─────────────┘
       │                                                   │
       │   S210, TRANSMIT, BY AP, FIRST FRAME, WHERE FIRST │
       │    FRAME CONTAINS IDENTITY INFORMATION, AND       │
       │    IDENTITY INFORMATION IS DETERMINED BASED ON    │
       │    FIRST SECRET INFORMATION AND TIME INFORMATION  │
       │                   OF AP                           │
       │◄──────────────────────────────────────────────── │
       │                                                   │
 ┌─────────────────────────┐                               │
 │ S220, RECEIVE, BY STA,   │                              │
 │     FIRST FRAME          │                              │
 └─────────────────────────┘                               │
       │                                                   │
 ┌────────────────────────────────────────────┐            │
 │ S230, IN CASE WHERE SSID IN FIRST FRAME IS  │           │
 │ SSID TO WHICH STA HAS BEEN CONNECTED,       │           │
 │ DETERMINE, BY STA, ACCORDING TO TIME        │           │
 │ INFORMATION OF STA, FIRST SECRET            │           │
 │ INFORMATION, AND IDENTITY INFORMATION,      │           │
 │ WHETHER AP IS MASQUERADED BY ANOTHER        │           │
 │ DEVICE, OR ASSOCIATE, BY STA, WITH AP       │           │
 │ ACCORDING TO TIME INFORMATION OF STA,       │           │
 │ FIRST SECRET INFORMATION, AND IDENTITY      │           │
 │ INFORMATION                                 │           │
 └────────────────────────────────────────────┘            │
       │                                                   │
```

FIG. 2

| ELEMENT ID | LENGTH | ELEMENT ID EXTENSION | IDENTITY |
|---|---|---|---|
| OCTETS: 1 | 1 | 1 | 2 |

FIG. 3

STA                        AP

**BEACON FRAME** (SSID, IDENTITY INFORMATION)[TA=MAC ADDRESS OF AP, RA=BROADCAST ADDRESS]

FIG. 4

STA                        AP

**PROBE REQUEST FRAME** (STA CAPABILITY INFORMATION)[TA=MAC ADDRESS OF STA, RA=BROADCAST ADDRESS]

**PROBE RESPONSE FRAME** (SSID, IDENTITY INFORMATION, AP CAPABILITY INFORMATION)

[TA=MAC ADDRESS OF AP, RA=MAC ADDRESS OF STA]

FIG. 5

EP 4 629 683 A1

MAC HEADER

| FRAME CONTROL | DURATION | RA | TA | BSSID | SEQUENCE CONTROL | CATEGORY | ACTION | CONTROL | TIME1 | TIME2 | FRAME CHECK SEQUENCE |
|---|---|---|---|---|---|---|---|---|---|---|---|

BYTES: 2   2   6   6   6   2   1   1   1   2   3   4

| TIME1 PRESENT | TIME2 PRESENT | RESERVED |
|---|---|---|

BITS: 1   1   6

FIG. 6

STA 300

COMMUNICATION UNIT
310

PROCESSING UNIT
320

FIG. 7

AP 400

COMMUNICATION UNIT
410

PROCESSING UNIT
420

FIG. 8

COMMUNICATION
DEVICE 500

MEMORY
520

PROCESSOR
510

TRANSCEIVER
530

FIG. 9

APPARATUS 600

INPUT
INTERFACE
630

PROCESSOR
610

MEMORY
620

OUTPUT
INTERFACE
640

FIG. 10

FIG. 11

**INTERNATIONAL SEARCH REPORT**

| International application No. |
| --- |
| **PCT/CN2022/136066** |

| A. | CLASSIFICATION OF SUBJECT MATTER |
| --- | --- |
| | H04W12/12(2021.01)i |

According to International Patent Classification (IPC) or to both national classification and IPC

| B. | FIELDS SEARCHED |
| --- | --- |

Minimum documentation searched (classification system followed by classification symbols)

    IPC:H04W

Documentation searched other than minimum documentation to the extent that such documents are included in the fields searched

Electronic data base consulted during the international search (name of data base and, where practicable, search terms used)

    CNABS; CNTXT; CNKI; VEN; WOTXT; USTXT; EPTXT; 3GPP: 无线网络, 终端, 用户, 设备, 站点, 时间, 伪, 恶意, 哈希, 密钥, STA, AP, SSID, fake, malicious, HASH, PSK, SAE

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112237017 A (SAMSUNG ELECTRONICS CO., LTD.) 15 January 2021 (2021-01-15) description, paragraphs [0027]-[0122] | 1-6, 11, 13, 15-20, 22-31, 33, 35, 37-41, 45, 47-63 |
| A | CN 103096301 A (HUAWEI TECHNOLOGIES CO., LTD.) 08 May 2013 (2013-05-08) entire document | 1-63 |
| A | CN 103596179 A (KUNSHAN INNOVATION INSTITUTE OF XIDIAN UNIVERSITY et al.) 19 February 2014 (2014-02-19) entire document | 1-63 |
| A | CN 105939521 A (BEIJING YUANXIN SCIENCE & TECHNOLOGY CO., LTD.) 14 September 2016 (2016-09-14) entire document | 1-63 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 August 2023** | **28 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/136066**

| Patent document cited in search report | | | Publication date (day/month/year) | Patent family member(s) | Publication date (day/month/year) |
|---|---|---|---|---|---|
| CN | 112237017 | A | 15 January 2021 | None | |
| CN | 103096301 | A | 08 May 2013 | None | |
| CN | 103596179 | A | 19 February 2014 | None | |
| CN | 105939521 | A | 14 September 2016 | None | |

Form PCT/ISA/210 (patent family annex) (July 2022)